# EUROPÄISCHE PATENTSCHRIFT

(11) **EP 1 531 209 B1**
(45) Veröffentlichungstag und Bekanntmachung des Hinweises auf die Patenterteilung: **04.08.2010**
(21) Anmeldenummer: 04025341.1
(22) Anmeldetag: 25.10.2004
(51) Int. Cl.: E04F 15/12, C04B 28/02, C04B 24/26, C04B 40/00

(54) **Verfahren zur Herstellung einer Entkopplungsschicht**
Method of forming a decoupling layer
Procédé de fabrication d'une couche de découplage

(30) Priorität: 11.11.2003 DE 10352613
(43) Veröffentlichungstag der Anmeldung: 18.05.2005
(73) Patentinhaber: PCI Augsburg GmbH, 86159 Augsburg (DE)
(72) Erfinder: Weichmann, Josef, Dr., 84568 Pleiskirchen (DE); Wache, Steffen, Dr., 86405 Erlingen (DE); Przybylla, Sonja, 86343 Königsbrunn (DE); Zimmermann, Jörg, Dr., 86420 Diedorf (DE); Kusmierz, Hilmar, 50374 Erftstadt (DE); Fründt, Mathias, 17139 Salem (DE)
(74) Vertreter: HOFFMANN EITLE

(56) Entgegenhaltungen:
- EP-A- 0 116 524
- WO-A1-00/30990
- GB-A- 2 083 015

## Beschreibung

Die vorliegende Erfindung betrifft ein Verfahren zur Herstellung einer Entkopplungsschicht, bei der eine Entkopplungsmasse in flüssiger Form auf den zu entkoppelnden Untergrund aufgebracht wird.

Beim Verlegen von starren Belägen, wie z.B. Fliesen, kommt es in der Praxis sehr oft vor, dass die Untergründe verformungsfähig sind, wie z.B. Holzuntergründe, Mischuntergründe mit verschiedenen thermischen Ausdehnungskoeffizienten oder trocknende junge Estriche. Auf diese Untergründe können starre Beläge ohne geeignete Entkopplungsmaßnahmen nicht dauerhaft ohne Risse oder Abscherungen eingebaut werden. Aus diesem Grund müssen Untergrund und Belag in der Regel mechanisch voneinander entkoppelt werden. Entsprechend dem Stand der Technik werden hierzu Entkopplungsmatten oder -Bahnen eingesetzt, die üblicherweise aus Recyclingmaterial, wie Polyestermatten, Korkunterlagen, Schaumfolien, Filzbelägen u.a., bestehen, die auf die zu entkoppelnden Untergründe geklebt oder lose verlegt werden.

Neben der Verlegung starrer Beläge auf verformungsfähige Untergründe werden auch verformungsfähige Beläge auf starre Untergründe verlegt, z.B. bei der Verlegung von Parkett auf Zementestrichen oder Anhydrit-Fließestrichen. Auch hier können auftretende Spannungen, hervorgerufen durch die Wasseraufnahme und -abgabe des Holzes, durch eine Entkopplung abgebaut werden. Es werden entsprechend dem Stand der Technik oben beschriebene Entkopplungsmatten oder -bahnen eingesetzt. Nachteilig bei dieser Vorgehensweise ist die Tatsache, dass das Zuschneiden dieser Matten und Bahnen sehr arbeits- und zeitintensiv ist, insbesondere bei schwierigen Raumgeometrien (wie z.B. hinter Heizungskörpern). Hinzu kommt, dass diese Entkopplungsmatten und -Bahnen nur auf weitgehend ebenen Untergründen verlegt werden können. Unebene Untergründe müssen vor dem Verlegen mit geeigneten Spachtelmassen egalisiert werden, was wiederum mit zusätzlichem Arbeits- und Zeitaufwand verbunden ist.

Aus der EP 0 116 524 A ist eine selbstverlaufende Zusammensetzung zur Nivellierung einer unebenen Oberfläche bekannt. In diesem Zusammenhang wird darauf hingewiesen, dass eine wichtige Eigenschaft der in diesem Dokument beanspruchten Nivellierschicht darin besteht, dass sie eine gute Oberflächenfestigkeit aufweist. Beschrieben ist somit eine Lastenverteilungsschicht mit den damit verbundenen Nachteilen und Unterschieden zu einer Entkoppelungsschicht. Die beschriebene Nivellierschicht ist nämlich nicht auf Dauer elastisch und kann deshalb auch direkt als Belag genutzt werden, bspw. in Industrieanlagen mit einer besonders hohen Belastung.

Ein Verfahren zur Herstellung einer selbstverlaufenden Bodenspachtelmasse beschreibt WO 00/30990 A1. Die dort beschriebenen Verlaufsmassen können nach dem Verlaufen entweder direkt als Nutzschicht oder aber als Untergrund für weitere Beschichtungen fungieren, womit sich auch derartige Massen aufgrund ihrer fehlenden dauerhaften Flexibilität grundsätzlich von einer Entkoppelungsschicht unterscheiden.

Schließlich sei noch die GB 2 083 015 A1 genannt. Bei den hier beschriebenen Systemen handelt es sich um übliche Nutzschichten, die als Sport- oder Industriebodenbeläge genutzt werden. Die dafür verwendeten Mörtelsysteme können zwar auch elastische Komponenten erhalten, allerdings stellen sie keine selbstverlaufenden Mörtelmassen dar. Entkoppelungsschichten oder Entkoppelungsmassen sind von der Gesamtoffenbarung nicht umfasst oder nahe gelegt.

Der vorliegenden Erfindung lag daher die Aufgabe zu Grunde, ein Verfahren zur Herstellung einer Entkopplungsschicht zu entwickeln, welches die genannten Nachteile des Standes der Technik nicht aufweist, sondern ohne großen Zeit- und Arbeitsaufwand das Aufbringen auf die jeweiligen zu entkoppelnden Untergründe ermöglicht.

Diese Aufgabe wurde erfindungsgemäß dadurch gelöst, dass man als Entkopplungsmasse ein ein- oder zweikomponentiges selbstverlaufendes Mörtelsystem einsetzt, das als Füllstoff Gummimehl bzw. - granulat enthält. Es hat sich nämlich überraschenderweise gezeigt, dass man auf diese Weise eine entsprechende Entkopplungsschicht ohne großen Zeit- und Arbeitsaufwand herstellen kann, da das Zuschneiden und Verkleben von Entkopplungsmatten vollständig entfallen kann. Da erfindungsgemäß das selbstverlaufende Mörtelsystem auch auf vergleichsweise unebene Untergründe aufgebracht werden kann, ist ein vorhergehendes Verspachteln des jeweiligen Untergrundes nicht erforderlich. Außerdem sind die erfindungsgemäß vorgeschlagenen Mörtelsysteme nach dem Aushärten dauerhaft flexibel, was ebenfalls nicht vorhersehbar war.

Beim Verfahren entsprechend der vorliegenden Erfindung erfolgt die Herstellung der Entkopplungsschicht auf verformungsfähigen Untergründen in der Weise, dass man als Entkopplungsmasse ein ein- oder zweikomponentiges Mörtelsystem einsetzt.

Es ist hierbei als erfindungswesentlich anzusehen, dass dieses Mörtelsystem selbstverlaufende oder selbstnivellierende Eigenschaften aufweist.

Vorzugsweise wird hierbei ein einkomponentiges Mörtelsystem eingesetzt, das aus 5 bis 60 Gew.-% eines hydraulisch härtenden Bindemittels, 30 bis 70 Gew.-% an Füllstoffen, 0,1 bis 50 Gew.-% eines redispergierbaren Polymerisat-Pulvers, 0,1 bis 5 Gew.-% an üblichen Additiven sowie als Rest aus Wasser besteht.

Als zweikomponentiges Mörtelsystem wird vorzugsweise eine Mischung bestehend aus 20 bis 80 Gew.-% einer Pulverkomponente und 80 bis 20 Gew.-% einer Flüssigkomponente verwendet. Die Pulverkomponente besteht gemäß einer bevorzugten Ausführungsform aus 5 bis 60 Gew.-% eines hydraulisch härtenden Bindemittels, 20 bis 70 Gew.-% an Füllstoffen, 0,1 bis 10 Gew.-% an üblichen Additiven und die Flüssigkomponente insbesondere aus 50 bis 98 Gew.-% einer wässrigen Polymerdispersion, vorzugsweise auf Vinyl- oder Acrylat-Basis, 0,1 bis 5 Gew.-% an üblichen Additiven sowie als Rest Wasser.

Als Bindemittel für das ein- oder zweikomponentige Mörtelsystem kommen die üblichen mineralischen Verbindungen, wie Zement, Kalk, Gips und Anhydrit, in Frage. Vorzugsweise werden Portlandzement (insbesondere CEM I 52,5 R), Tonerdeschmelzzement, Mischungen von Portlandzement mit Tonerdeschmelzzement, Mischungen von Portlandzement und Tonerdezement sowie anderen hydraulisch bzw. puzzolanisch abbindenden Stoffen, wie z.B. Anhydrit, eingesetzt.

Das redispergierbare Polymerisatpulver ist vorzugsweise auf folgenden Monomersystemen aufgebaut:
Styrol/Acrylat, Vinylacetat/VeoVa/Ethylen,
Vinylacetat/Ethylen, Vinylacetat/VeoVa,
Vinylacetat/VeoVa/Acrylat, Vinylacetat/VeoVa/Acrylat/Ethylen, Acrylat/Vinylacetat und Styrol/Butadien.

Die wässrigen Polymer-Dispersionen basieren insbesondere auf Homo- oder Copolymeren mit folgenden Monomersystemen:
Vinylacetat, Vinylacetat-Ethylen, Vinylacetat-Ethylen-VeoVa, Styrol-Acrylat, Acrylat, Styrol-Butadien, Polyvinylendichlorid.

Als Füllstoffe kommen neben Gummimehl bzw. -granulat vorzugsweise Sand, Kreide, Korkmehl- bzw. -granulat, und Schwerspat verschiedener Siebungen zum Einsatz. Schließlich werden als übliche Additive Erstarrungsbeschleuniger (wie z.B. Lithiumcarbonat) oder Erstarrungsverzögerer wie z.B. Zitronensäure sowie Fließmittel auf Basis von Melamin- oder Ligninsulfonaten sowie Polycarboxylate eingesetzt. Außerdem kann die Flüssigkomponente noch die üblichen Zusätze in Form von Entschäumern, Bioziden und Filmbildehilfsmittel enthalten.

Die erfindungsgemäß verwendeten Mörtelsysteme werden durch Anrühren mit Wasser (einkomponentig) oder Mischen von Flüssig- und Pulverkomponente (zweikomponentig) hergestellt. Die selbstverlaufenden Mörtelsysteme, die eine Verarbeitungs-oder Topfzeit von ca. 1 Stunde aufweisen, werden mit den üblichen Methoden (wie Vergießen, Aufbringen mit Rakel- oder Schwabbelstangen) auf den nicht-starren Untergrund aufgebracht, wobei Schichtdicken von 0,1 bis 20 mm als bevorzugt anzusehen sind.

Nach dem Aushärten der Mörtelsysteme von ca. 12 bis 14 Stunden ist die jeweilige Entkopplungsschicht begehbar und kann bspw. mit Fliesen belegt werden. Die Vorteile des erfindungsgemäßen Verfahrens sind geringer Zeit- und Arbeitsaufwand bei gleichzeitig guten Eigenschaften, wie dauerhafte Flexibilität der ausgehärteten Entkopplungsschicht.

Die nachfolgenden Beispiele sollen die Erfindung näher veranschaulichen.

### Beispiele

### Beispiel 1

### Rezeptur für einkomponentiges System

| | |
|---|---|
| Tonerdeschmelzzement (Lafarge Fondue) | 12,0 Gew.-% |
| Gips Supraduro 20 (Börgardts) | 5,0 Gew.-% |
| Vinylacetat/Ethylen-Dispersionspulver | 25,0 Gew.-% |
| Mowilith DM 117 P (Celanese) | |
| Zitronensäure | 1,0 Gew.-% |
| Münsterkalk | 1,0 Gew.-% |
| Fließmittel Melment F 17 G (Degussa) | 1,0 Gew.-% |
| Kreide Omyacarb 10-GU (Omya) | 35,0 Gew.-% |
| Gummimehl | 20,0 Gew.-% |

### Beispiel 2

### Rezeptur für zweikomponentiges System

### A) Pulverkomponente

| | |
|---|---|
| Portlandzement CEM I 42,5 R (Märker) | 11,00 Gew.-% |
| Tonerdezement (Lafarge Fondue) | 4,75 Gew.-% |
| Gips Supraduro 20 (Börgardts) | 1,60 Gew.-% |
| Lithiumcarbonat | 1,25 Gew.-% |
| Calciumformiat | 1,60 Gew.-% |
| Münster Kalkhydrat | 1,60 Gew.-% |
| Gummimehl | 41,00 Gew.-% |
| Freihunger Quarzsand BCS 221 (Strobel) | 37,00 Gew.-% |
| Fließmittel Melment F 17 G (Degussa) | 0,20 Gew.-% |

### B) Flüssiqkomponente

| | |
|---|---|
| Polymerdispersion auf Basis Styrol-Butadien | |
| | 96,30 Gew.-% |
| Lipaton SB 5813 (Polymer Latex) | |
| Entschäumer Agitan 282 (Münzig) | 0,14 Gew.-% |
| Biozid Acticide MBS (Thor) | 0,80 Gew.-% |
| Filmbildehilfsmittel Dowanol DPnB (Dow) | 2,76 Gew.-% |

### Beispiel 3

### Herstellung der Entkopplungsschicht

Zunächst wird der zu entkopplende Untergrund, z.B. ein unebener brüchiger Zementestrich, von Staub und losen Verschmutzungen gereinigt. Stark saugende Untergründe, wie poröser Zementestrich oder Anhydritfließestrich, werden z.B. mit einer wässrigen Dispersions-Grundierung vorgestrichen, um Blasenbildung in der Entkopplungsmasse zu vermeiden.

Der Untergrund braucht entsprechend dem erfindungsgemäßen Verfahren nicht durch Spachtelarbeiten nivelliert zu werden. Löcher im Untergrund, z.B. um Heizungsrohre herum, werden mit z.B. Malerkrepp so verschlossen, dass die flüssig eingebrachte Entkopplungsmasse in diese nicht eindringen kann.

Die einkomponentige Entkopplungsmasse gemäß Beispiel 1 wird mit soviel Leitungswasser angerührt, dass eine fließfähige Materialkonsistenz entsteht. Dieser Vorgang kann z.B. durch Vorlegen des Wassers in einem Anrührgefäß und Zugabe der pulverförmigen einkomponentigen Entkopplungsmasse unter Rühren durchgeführt werden.

Die zweikomponentige Entkopplungsmasse gemäß Beispiel 2 wird durch Vorlegen der Flüssigkomponente in einem Anrührgefäß und Zugabe der Pulverkomponente unter Rühren erfindungsgemäß zu einer fließfähigen Masse angerührt.

Beide angerührten Materialien können über einen Zeitraum von ca. 90 Minuten verarbeitet werden und direkt aus dem Anrührgefäß auf den Untergrund aufgebracht werden.

Die Verteilung des Materials auf dem Untergrund erfolgt erfindungsgemäß vergleichbar mit einer selbstverlaufenden Spachtelmasse mit einem Beschichterrakel. Das gleichmäßig auf dem Untergrund verteilte Material wird mit Hilfe einer Stachelwalze nochmals egalisiert und entlüftet.

Das Material ist bei Normalklima (23 °C und 50 % rel.) nach ca. 8 Stunden so weit durchgehärtet, dass es begehbar ist. Bei Temperaturen von 10 °C und relativen Luftfeuchtigkeiten von 80 % rel. beträgt die Durchhärtezeit ca. 16 Stunden (über Nacht).

Die so hergestellten Entkopplungsmassen weisen bei ca. 4,0 mm Trockenschichtdicke Rissüberbrückungswerte von über 1,0 mm auf (Bestimmung in Anlehnung an DIN 28052-6). Die entkoppelnde Wirkung wird nach dem sogenannten Würfeltest bestimmt. Bei dieser Methode wird ein Betonwürfel einer Verformung unterzogen, die mittels Dehnungs-Messstreifen auf der Betonoberfläche einerseits und auf einer auf den Betonwürfel aufgeklebten Fliesenoberfläche andererseits detektiert wird. Als Entkopplungswert wird das Verhältnis beider Messwerte zueinander in Prozent angegeben. Eine mit einem herkömmlichen Fliesenkleber verklebte Fliese weist einen Entkopplungswert von ca. 20 % auf. Eine erfindungsgemäßer Aufbau mit Einbau einer Entkopplungsmasse zwischen Betonwürfel und Fliese weist Entkopplungswerte von 95 % bei der einkomponentigen Entkopplungsmasse gemäß Beispiel 1 und 98 % bei der zweikomponentigen Entkopplungsmasse gemäß Beispiel 2 auf.

## Patentansprüche

1. Verfahren zur Herstellung einer Entkopplungsschicht, **dadurch gekennzeichnet, dass** man als Entkopplungsmasse ein ein- oder zweikomponentiges selbstverlaufendes Mörtelsystem, das als Füllstoff Gummimehl bzw. -granulat enthält, einsetzt.

2. Verfahren nach Anspruch 1, **dadurch gekennzeichnet, dass** man ein einkomponentiges selbstverlaufendes Mörtelsystem einsetzt, das aus
5 bis 60 Gew.-% eines hydraulisch härtenden Bindemittels, 30 bis 70 Gew.-% an Füllstoffen, 0,1 bis 50 Gew.-% eines redispergierbaren Polymerisat-Pulvers, 0,1 bis 5 Gew.-% an üblichen Additiven sowie als Rest aus Wasser besteht.

3. Verfahren nach Anspruch 1, **dadurch gekennzeichnet, dass** ein zweikomponentiges Mörtelsystem verwendet wird, das aus 20 bis 80 Gew.-% einer Pulverkomponente und 80 bis 20 Gew.-% aus einer Flüssigkomponente besteht.

4. Verfahren nach Anspruch 3, **dadurch gekennzeichnet, dass** man eine Pulverkomponente einsetzt, die aus 5 bis 60 Gew.-% eines hydraulisch härtenden Bindemittels, 20 bis 70 Gew.-% an Füllstoffen, 0,1 bis 10 Gew.-% an üblichen Additiven und die Flüssigkomponente aus 50 bis 98 Gew.-% einer wässrigen Polymer-Dispersion, insbesondere auf Vinyl- oder Acrylat-Basis, 0,1 bis 5 Gew.-% an üblichen Additiven sowie als Rest aus Wasser besteht.

5. Verfahren nach einem der Ansprüche 1 bis 4, **dadurch gekennzeichnet, dass** man das ein- oder zweikomponentige fließfähige Mörtelsystem mit einer Schichtdicke von 0,1 bis 20 mm auf den nicht-starren Untergrund aufbringt.

## Claims

1. Process for producing a decoupling layer, **characterised in that** a one-component or two-component self-levelling mortar system, which contains rubber powder or rubber granules as filler, is used as the decoupling composition.

2. Process according to claim 1, **characterised in that** a one-component self-levelling mortar system, which consists of 5 to 60 wt.% of a hydraulically hardening binder, 30 to 70 wt.% of fillers, 0.1 to 50 wt.% of a redispersable polymer powder, 0.1 to 5 wt.% of conventional additives and as the remainder of water, is used.

3. Process according to claim 1, **characterised in that** a two-component mortar system is used which consists of 20 to 80 wt.% of a powder component and 80 to 20 wt.% of a liquid component.

4. Process according to claim 3, **characterised in that** a powder component is used which consists of 5 to 60 wt.% of a hydraulically hardening binder, 20 to 70 wt.% of fillers, 0.1 to 10 wt.% of conventional additives and the liquid component consists of 50 to 98 wt.% of an aqueous polymer dispersion, in particular based on vinyl or acrylate, 0.1 to 5 wt.% of conventional additives and as the remainder of water.

5. Process according to one of claims 1 to 4, **characterised in that** the one-component or two-component flowable mortar system is applied to the non-rigid substrate with a layer thickness of 0.1 to 20 mm.

## Revendications

1. Procédé de fabrication d'une couche de découplage, **caractérisé en ce que** l'on utilise comme masse de découplage un système de mortier auto-lissant mono-composant ou bi-composant qui contient de la poudre de caoutchouc respectivement du granulat de caoutchouc en tant que matière de remplissage.

2. Procédé selon la revendication 1, **caractérisé en ce que** l'on utilise un système de mortier auto-lissant mono-composant qui est constitué de 5 à 60 % en poids d'un liant hydraulique durcissant, de 30 à 70 % en poids de matières de remplissage, de 0,1 à 50 % en poids d'une poudre de polymérisat pouvant être redispersée, de 0,1 à 5 % en poids d'additifs usuels et d'eau pour le reste.

3. Procédé selon la revendication 1, **caractérisé en ce que** l'on utilise un système de mortier bi-composant qui est constitué de 20 à 80 % en poids d'un composant sous forme de poudre et de 80 à 20 % en poids d'un composant sous forme liquide.

4. Procédé selon la revendication 3, **caractérisé en ce que** l'on utilise un composant sous forme de poudre qui est constitué de 5 à 60 % en poids d'un liant hydraulique durcissant, de 20 à 70 % en poids de matières de remplissage, de 0,1 à 10 % en poids d'additifs usuels et le composant sous forme liquide qui est constitué de 50 à 98 % en poids d'une dispersion aqueuse de polymère, en particulier à base de vinyle ou d'acrylate, de 0,1 à 5 % en poids d'additifs usuels et d'eau pour le reste.

5. Procédé selon l'une des revendications 1 à 4, **caractérisé en ce que** l'on applique le système de mortier coulant mono-composant ou bi-composant en une couche de 0,1 à 20 mm d'épaisseur sur le fond non rigide.
